# EUROPÄISCHE PATENTSCHRIFT

(11) **EP 0 822 727 B1**
(45) Veröffentlichungstag und Bekanntmachung des Hinweises auf die Patenterteilung: **21.03.2007**
(21) Anmeldenummer: 97111781.7
(22) Anmeldetag: 10.07.1997
(51) Int. Cl.: H04Q 7/22, H04Q 7/38, H04Q 7/32

(54) **Verfahren und System zur Teilnehmerauthentifikation und / oder Verschlüsselung von Informationen**
Method and system for subscriber authentication and/or information encryption
Procédé et système d'authentification d'abonné et/ou de chiffrement d'informations

(30) Priorität: 31.07.1996 DE 19630920
(43) Veröffentlichungstag der Anmeldung: 04.02.1998
(73) Patentinhaber: SIEMENS AKTIENGESELLSCHAFT, 80333 München (DE)
(72) Erfinder: Linder, Hermann, 84405 Dorfen (DE)

(56) Entgegenhaltungen:
- EP-A- 0 717 578
- MOLVA R ET AL: "AUTHENTICATION OF MOBILE USERS" IEEE NETWORK: THE MAGAZINE OF COMPUTER COMMUNICATIONS, Bd. 8, Nr. 2, 1. März 1994, Seiten 26-34, XP000515077 New York, US,
- BEHEIM J: ""SAFETY FIRST" BEI EUROPAWEITER MOBILKOMMUNIKATION" TELCOM REPORT, Bd. 16, Nr. 6, 1. November 1993, Seiten 326-329, XP000425541 München, DE,

## Beschreibung

Die Erfindung betrifft ein Verfahren und ein System zur Teilnehmerauthentifikation und/oder zur Verschlüsselung von Informationen gemäß dem Oberbegriff des Patentanspruchs 1 bzw. des Patentanspruchs 8.

Aus dem Aufsatz "Safety First bei europaweiter Mobilkommunikation", telcom report 16 (1993), Heft 6, Seiten 326 bis 329, ist ein Verfahren und ein System zum Schutz der Teilnehmerdaten gegen unberechtigten Zugriff und vor Mißbrauch von persönlichen Teilnehmerinformationen für mobile Teilnehmer eines zellularen digitalen Mobilfunknetzes nach dem internationalen GSM-Standard (Global System for Mobile Communication) bekannt. Dabei identifizieren sich die mobilen Teilnehmer, die über Ländergrenzen hinweg in den Netzen der unterschiedlichen Betreiber kommunizieren können, mit einem Teilnehmeridentitätsmodul - auch als SIM-Karte (Subscriber Identity Module) bezeichnet -, das in der Funkteilnehmerstation enthalten ist, gegenüber dem jeweiligen Netz. Der mobile Teilnehmer wird nach Erhalt der SIM-Karte in einer Authentifikationseinrichtung (Authentification Center) registriert, von der zum Schutz der Teilnehmerdaten der mobilen Teilnehmer jeweils Sicherheitsparameter und Sicherheitsalgorithmen bereitgestellt werden. Zu diesem Zweck verfügt die Authentifikationseinrichtung über eine Sicherungseinheit (Security Box), in der die Sicherheitsalgorithmen implementiert sind. Darüber hinaus besteht bekanntlich die Möglichkeit, die Informationen für die Übertragung zu verschlüsseln (ciphering).

Wegen der hohen Sicherheitsrelevanz sind die GSM-Sicherungsmaßnahmen, insbesondere die Sicherheitsparameter und die Sicherheitsalgorithmen, nur den Netzbetreibern, die sich in einer gemeinsamen Vereinbarung ("Memorandum of Understanding") dem länderübergreifenden Mobilfunknetzstandard angeschlossen haben, und Infrastrukturherstellern zugänglich. Daher können diese Sicherungsmaßnahmen nur in Mobilfunknetzen eingesetzt und nicht in anderen Netzen, beispielsweise in privaten Netzen (Corporate Networks), zur Anwendung kommen. Auch ist eine Anwendung zwischen dem GSM-Standard und einem anderen Funkstandard, beispielsweise dem DECT-Standard (Digital Enhanced Cordless Telecommunication), oder eine Anwendung in einem universellen Kommunikationsnetz (Universal Personal Telecommunication, UPT) nicht ohne weiteres möglich, selbst wenn zwischen einem Netzbetreiber eines GSM-Mobilfunknetzes und einem anderen Netzbetreiber gemeinsame Vereinbarungen bezüglich Unterstützung der Teilnehmermobilität (Roaming) zwischen den Netzen bestehen. Somit existieren entweder Vereinbarungen nur zwischen Mobilfunknetzen, die den GSM-Standard unterstützen, oder eine Anwendung in Netzen verschiedenen Funkstandards sind nur durch doppelte Teilnehmereinträge in den Teilnehmerdatenbasen beider Netze und somit nur unterschiedliche Authentifikationsverfahren möglich.

Aufgabe der vorliegenden Erfindung ist es, ein Verfahren und ein System zur Teilnehmeridentifikation und/oder zur Verschlüsselung von Informationen anzugeben, durch das die Sicherungsmaßnahmen auch in anderen, jeweils mit dem Mobilfunknetz in Verbindung stehenden Netzen mit möglichst geringem Aufwand angewendet werden können.

Diese Aufgabe wird gemäß den Merkmalen des Patentanspruchs 1 hinsichtlich des Verfahrens und durch die Merkmale des-Patentanspruchs 8 hinsichtlich des Systems gelöst.

Die Sicherheitsparameter werden vom Mobilfunknetz für Teilnehmer eines anderen Netzes über eine beide Netze verbindende Schnittstelle bereitgestellt, ohne für diese Teilnehmer im Mobilfunknetz Teilnehmereinträge in zumindestens einer Teilnehmerdatenbasis des Mobilfunknetzes vorzunehmen. Dabei identifizieren sich die Teilnehmer des anderen Netzes jeweils mit dem Teilnehmeridentitätsmodul und werden zumindestens in einer Teilnehmerdatenbasis des anderen Netzes eingerichtet. Die Sicherheitsparameter für den im anderen Netz eingerichteten Teilnehmer werden über die Schnittstelle angefordert, von einer Authentifikationseinrichtung des Mobilfunknetzes bereitgestellt und über die Schnittstelle zum anderen Netz übertragen. Eine Eintragung des Teilnehmers in der Teilnehmerdatenbasis des Mobilfunknetzes unterbleibt, was insbesondere auch den Vorteil hat, keine Mobilteilnehmerrufnummer im Mobilfunknetz vergeben und somit keine Verwaltung der Teilnehmer des anderen Netzes durchführen zu müssen. Anhand der vom Mobilfunknetz gelieferten und im anderen Netz empfangenen Sicherheitsparameter werden die Teilnehmerauthentifikation für die im anderen Netz registrierten Teilnehmer und/oder die Verschlüsselung der Informationen ausgeführt. Das andere Netz, das beispielsweise ein Privatnetz mit Nebenstelleneinrichtungen darstellt, kann auf diese Weise eigenständig die Sicherungsmaßnahmen zum Schutz gegen unberechtigten Zugriff auf Teilnehmerdaten sowie vor Mißbrauch individueller Teilnehmerdaten und/oder zur Verschlüsselung der Informationen abwickeln, ohne daß hiervon das Mobilfunknetz -mit- Ausnahme der Übersendung der Sicherheitsparameter - betroffen ist und ohne daß das andere Netz die streng geheimen Sicherheitsalgorithmen zur Bestimmung der Sicherheitsparameter im anderen Netz implementieren muß.

Von Vorteil ist dabei, wenn zunächst minestens ein Satz von Sicherheitsparametern über die Schnittstelle angefordert, übertragen und die Teilnehmerauthentifikation bzw. Verschlüsselung durchgeführt wird, bevor eine erneute Anfrage an das Mobilfunknetz zur Bereitstellung weiterer Sätze von Sicherheitsparameter vom anderen Netz initiiert wird. Die Anwendung der Sicherheitsparameter und Sicherheitsalgorithmen zur Teilnehmerauthentifikation und vorzugsweise auch zur Verschlüsselung von Informationen, die über die Luft zwischen einer Basisstation und einer Funkteilnehmerstation gesendet werden, kann somit sowohl bei Kommunikation des Teilnehmers über das andere Netz - beispielsweise das den DECT-Funkstandard unterstütztende private Netz - als auch bei Kommunikation des Teilnehmers für den Fall, daß der Teilnehmer seinen Aufenthaltsort von einem Bereich des anderen Netzes in den Versorgungsbereich des Mobilfunknetzes wechselt.

Die Erfindung wird anhand eines in Figuren dargestellten Ausführungsbeispiels näher erläutert. Im einzelnen zeigen
- Figur 1: in einem Blockschaltbild die Teilnehmerauthentifikation in einem an das Mobilfunknetz angeschlossenen privaten Netz und
- Figur 2: den Nachrichtenfluß zur Teilnehmerauthentifikation zwischen privatem Netz und Mobilfunknetz.

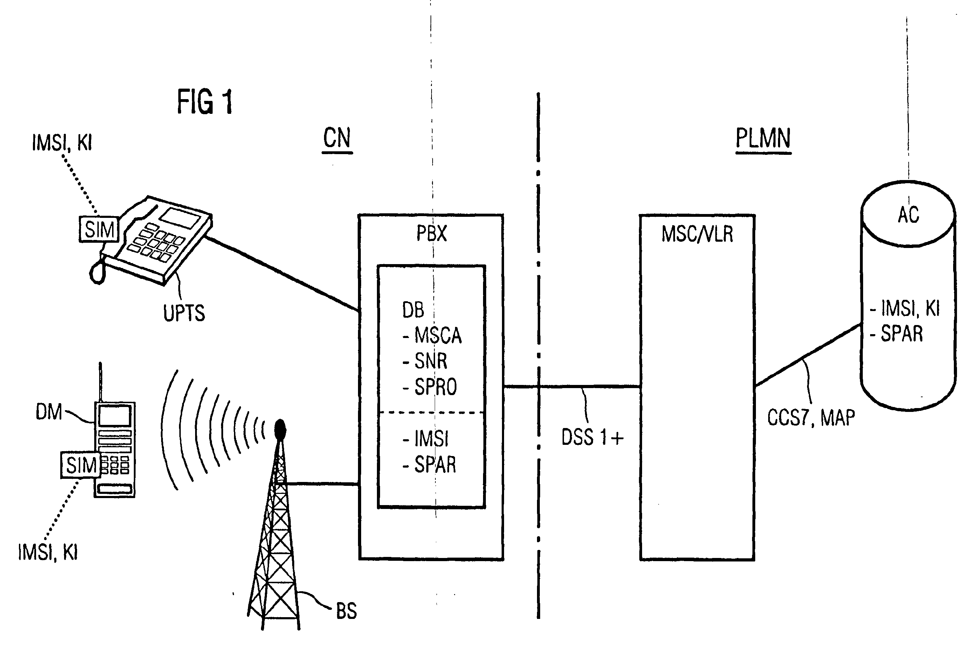

Figur 1 zeigt das Blockschaltbild zur Teilnehmerauthentifikation bzw. Verschlüsselung von Informationen in einem privaten Netz CN, das über eine Schnittstelle DSS1+ mit einem Mobilfunknetz PLMN, beispielsweise dem Mobilfunknetz nach dem GSM-Standard, verbunden ist. Das zellular aufgebaute digitale Mobilfunknetz PLMN weist bekanntlich ein funktechnisches Teilsystem und ein vermittlungtechnisches Teilsystem auf. Dabei kommunizieren die Funkteilnehmerstationen der in einer Heimat-Teilnehmerdatenbasis (Heimatregister) und abhängig vom Aufenthaltsort in einer Besucher-Teilnehmerdatenbasis (Besucherregister) des vermittlungtechnisches Teilsystems registrierten mobilen Teilnehmer über eine Luftschnittstelle mit jeweils einer von mehreren Basis-Sende/Empfangsstationen des funktechnischen Teilsystems und umgekehrt. Die Basis-Sende/Empfangsstationen bedienen eine Vielzahl von Funkzellen, aus denen das Mobilfunknetz PLMN zur Funkversorgung möglichst vieler Teilnehmer zusammengesetzt ist.

An das funktechnische Teilsystem ist das vermittlungstechnische Teilsystem zur Ausführung vermittlungsbezogener und mobilitätsspezifischer Funktionen angeschlossen. Das vermittlungstechnische Teilsystem weist eine Mehrzahl von Mobilvermittlungsstellen MSC mit zugehörigem Besucherregister VLR auf, in dem die Teilnehmerdaten der in einem von der Mobilvermittlungsstelle MSC jeweils bedienten Versorgungsbereich sich aktuell aufhaltenden Teilnehmer dezentral temporär gespeichert sind. Die Teilnehmerdaten der mobilen Teilnehmer werden somit nur solange im Besucherregister VLR, das als dezentrale Teilnehmerdatenbasis im Mobilfunknetz PLMN wirkt, aufbewahrt, solange sie sich im jeweils betreuten Versorgungsbereich befinden. Neben den Besucherregistern VLR verfügt das Mobilfunknetz PLMN über zumindestens ein - nicht dargestelltes - Heimatregister HLR. Darin sind alle Teilnehmerdaten aller mobilen Teilnehmer für die Dauer der Registrierung im Mobilfunknetz PLMN zentral gespeichert. Mit dem Heimatregister HLR ist eine Authentifikationseinrichtung AC verbunden, die eine Sicherungseinheit (Security Box) mit einem eigenem Prozessor und einem eigenen Betriebssystem aufweist. In der Authentifikationseinrichtung AC ist der mobile Teilnehmer mit einer ihm zugewiesenen Mobilteilnehmerkennung IMSI registriert, wobei auch ein von der Vorbereitung der SIM-Karte stammender geheimer Teilnehmerschlüssel KI abgespeichert ist. Die SIM-Karte stellt ein Teilnehmeridentitätsmodul SIM dar, mit dem der Teilnehmer sich gegenüber dem Mobilfunknetz PLMN identifiziert.

Nach Identifikation des Teilnehmers mit dem Teilnehmeridentitätsmodul SIM erfolgt eine Teilnehmerauthentifikation zur Überprüfung der Netzzugangsberechtigung des mobilen Teilnehmers. Zu diesem Zweck werden in der Authentifikationseinrichtung AC Sicherheitsparameter SPAR bereitgestellt und als Eingangsparameter für vorgegebene Sicherheitsalgorithmen - beispielsweise nach dem internationalen GSM-Standard definierte Sicherheitsalgorithmus A3/A8 - verwendet, die ihrerseit Sicherungsparameter (z.B. SRES, siehe später) zur Authentifikation bzw. zur Verschlüsselung der Informationen (z.B. KC, siehe später) als Ausgangsparameter liefern. Die Netzbetreiber des länderübergreifenden GSM-Mobilfunknetzes sind jedoch an diese Sicherheitsalgorithmen nicht gebunden und können eigene Sicherheitsalgorithmen implementieren. Die Sicherungseinheit in der Authentifikationseinrichtung AC liefert unter Verwendung einer Zufallszahl (RAND) und der gespeicherten Parameter IMSI, KI als Ergebnis des Sicherheitsalgorithmus A3 ein Signal (SRES, Signed Response). Ebenso erzeugt das Teilnehmeridentitätsmodul SIM gemäß dem darin implementierten Sicherheitsalgorithmus A3 anhand der zuvor übertragenen Zufallszahl und der gespeicherten Parameter IMSI, KI das Signal (SRES, Signed Response). Die beiden Signale werden von einer Netzeinrichtung des Mobilfunknetzes PLMN, vorzugsweise von der Mobilvermittlungsstele MSC, bezüglich Identität miteinander verglichen wird. Stimmen beide Signale überein, ist die Teilnehmerauthentifikation erfolgreich durchgeführt worden. Im Zuge der Authentifikation wird in dem Teilnehmeridentitätsmodul SIM gemäß dem Sicherheitsalgorithmus A8 der Schlüssel (KC) zur Verschlüsselung der Informationen berechnet. Zur Kommunikation der einzelnen Einrichtungen des Mobilfunknetzes PLMN ist ein zentrales Zeichengabesystem CCS7 (Zeichengabesystem Nummer 7) vorgesehen, das einen mobilfunkspezifischen Anwenderteil MAP zur Behandlung der mobilitätsbezogenen Funktionen aufweist.

Das private Netz CN weist zumindestens eine Nebenstelleneinrichtung PBX auf, an das Teilnehmer über Teilnehmerstationen UPTS drahtgebunden oder über eine Funkteilnehmerstation DM, beispielsweise eine für den GSM-Standard und den DECT-Standard geeignete Dual-Mode-Funkteilnehmerstation, über eine Basisstation BS angeschlossen sind. Dabei unterstützt die Teilnehmerstation UPTS die universelle persönliche Kommunikation in einem drahtgebundene Teilnehmer und/oder mobile Teilnehmer bedienenden Telekommunikationsnetz (Universal Personal Telecommunication, UPT). Beiden Teilnehmerstationen UPTS, DM ist gemeinsam, daß sich der Teilnehmer des privaten Netzes CN sich mit dem in der Teilnehmerstation enthaltenen bzw. in die Teilnehmerstation eingefügten Teilnehmeridentitätsmodul SIM gegenüber dem Netz identifiziert. Das Teilnehmeridentitätsmodul speichert für den Teilnehmer die Teilnehmerkennung IMSI und den geheimen Teilnehmerschlüssel KI. Während der geheime Teilnehmerschlüssel KI nur zur Teilnehmerauthentifikation beispielsweise gemäß dem implementierten Sicherheitsalgorithmus A3 verwendet wird, dient die Teilnehmerkennung IMSI auch zur Festlegung der Authentifikationseinrichtung AC im Mobilfunknetz PLMN, von der die Sicherheitsparameter SPAR zur Authentifikation und/oder Verschlüsselung der Teilnehmer des privaten Netzes CN bereitzustellen sind. Das private Netz besteht beispielsweise aus einem Firmennetz (Corporate Network) mit mehreren Standorten, die untereinander vernetzt sind und an Nebenstelleneinrichtungen PBX die Teilnehmer über Leitungen oder über Funkwege beispielsweise durch Anschluß von DECT-Schnurlossystemen bedienen.

Die Nebenstelleneinrichtung PBX weist jeweils eine Teilnehmerdatenbasis DB auf, in der die Teilnehmerdaten der jeweils registrierten Teilnehmer gespeichert sind. Zu den Teilnehmerdaten gehören beispielsweise eine Adresse MSCA zur Auswahl der über die Schnittstelle DSS1+ erreichbaren Mobilvermittlungsstelle MSC, die Teilnehmernummer SNR, ein Diensteprofil SPRO zur Festlegung der vom Teilnehmer jeweils nutzbaren Telekommunikationsdienste, die vom Teilnehmeridentitätsmodul SIM in der Teilnehmerstation UPTS, DM empfangene Teilnehmerkennung IMSI zur Ermittlung der Authentifikationseinrichtung AC, sowie die von der Authentifikationseinrichtung AC gelieferten Sicherheitsparameter SPAR, anhand der im privaten Netz CN die Authentifikationsprozedur und/oder die Verschlüsselungsprozedur eigenständig abgewickelt werden können. Über die Schnittstelle DSS1+, die zwischen der Nebenstelleneinrichtung PBX und der Mobilvermittlungsstelle MSC besteht, wird ein Schnittstellenprotokoll verwendet, das den Austausch der Sicherheitsparameter SPAR unter Einschluß von mobilitätsspezifischen und sicherungsspezifischen Funktionen ermöglicht. Die Schittstelle DSS1+ bedient sich z.B. eines bestehenden Protokolls zum Anschluß von Nebenstelleneinrichtungen an eine Mobilvermittlungsstelle, erweitert um die Nachrichten zur Übertragung der Sicherheitsparameter SPAR. So können beispielsweise die Sicherheitsalgorithmen und bereitgestellten Sicherheitsparameter im privaten Netz CN dazu führen, auch Maßnahmen zur Verschlüsselung der zwischen der Funkteilnehmerstation DM und der Basisstation BS über die Luft zu sendenden Informationen - beispielsweise Sprache und Daten - zu ergreifen. Hierzu ist der gesonderte Schlüssel (KC) für die Luftschnittstelle erforderlich, der als Teil der Sicherheitsparameter SPAR vom Mobilfunknetz angefordert und von der Authentifikationseinrichtung AC bereitgestellt bzw. über die Schnittstelle DSS1+ empfangen wird.

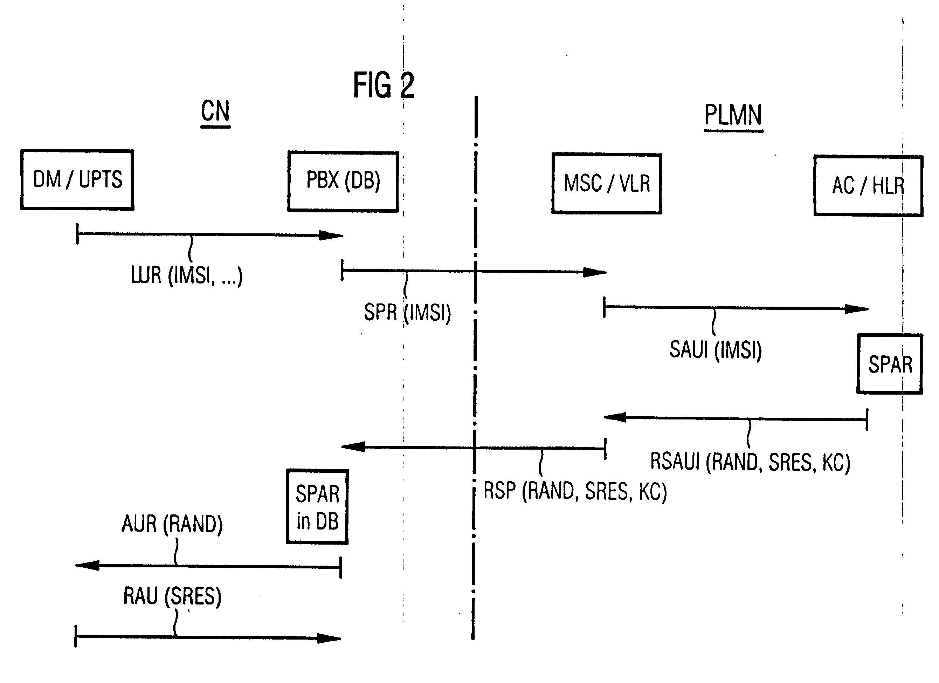

Figur 2 zeigt den Ablauf zur Teilnehmerauthentifikation der im privaten Netz CN registrierten Teilnehmer durch Übersendung von Sicherheitsparametern SPAR aus dem Mobilfunknetz, ohne daß hierzu ein Teilnehmereintrag in einem Heimatregister HLR des Mobilfunknetzes PLMN erfolgt. Nach der Identifikation des Teilnehmers in der Teilnehmerstation DM bzw. UPTS wird eine Nachricht LUR, die unter anderem die Teilnehmerkennung IMSI enthält, zur Nebenstelleneinrichtung PBX gesendet, von der der Teilnehmer durch Eintragung seiner Teilnehmerdaten in die Teilnehmerdatenbasis DB registriert wird. Die Nachricht LUR (Location Update Request) wird von der Teilnehmerstation immer dann ausgesendet, wenn eine Aufenthaltsregistrierung entweder erstmals oder bei Übertritt in den Bereich einer anderen Nebenstelleneinrichtung notwendig ist.

Von der Nebenstelleneinrichtung PBX des privaten Netzes CN wird eine Nachricht SPR mit der Teilnehmerkennung IMSI als Nachrichteninhalt über die Schnittstelle gemäß Figur 1 zur Mobilvermittlungsstelle MSC die Anforderung zur Übertragung der Sicherheitsparameter für die Teilnehmerauthentifikation der im privaten Netz CN registrierten Teilnehmer und/oder für die Verschlüsselung der Informationen im Zuge der Authentifikation signalisiert. Die Mobilvermittlungsstelle MSC sendet daraufhin eine Nachricht SAUI mit der Teilnehmerkennung IMSI als Nachrichteninhalt zur entsprechenden Authentifikationseinrichtung AC. Mit der Nachricht SAUI (Send Authentication Info) werden die in der Authentifikationseinrichtung berechneten und bereitgestellten Sicherheitsparameter SPAR angefordert. Dabei erfolgt die Anforderung der Sicherheitsparameter SPAR, ohne daß ein Teilnehmereintrag, der üblicherweise die Kennung IMSI enthält, angelegt wird. Insbesondere wird auch keine Mobilteilnehmerrufnummer (MSISDN), wie für die mobilen GSM-Teilnehmer im Netz üblich, vergeben. Somit wird der Teilnehmer des privaten Netzes CN lediglich in der für ihn zuständigen Nebenstelleneinrichtung PBX als Teilnehmer registriert, während in dem Heimatregister HLR dieser Teilnehmer nicht existent ist und für ihn lediglich Sicherheitsparameter SPAR von der Authentifikationseinrichtung AC als transiente Daten hinterlegt und zur Nebenstelleneinrichtung PBX, die als Heimat-Nebenstelleneinrichtung den Teilnehmer registriert, gesendet werden.

Daher können Teilnehmeridentitätsmodule SIM an Netzbetreiber anderer Netze, beispielsweise privater Netze CN, ausgegeben werden, die lediglich für eine Eintragung der Teilnehmer in der entsprechenden Teilnehmerdatenbasis, im vorliegenden Beispiel in der Teilnehmerdatenbasis DB der Nebenstelleneinrichtung PBX, sorgen müssen. Die vom Netzbetreiber oder auch von einem Diensteanbieter an Benutzer von Teilnehmerstationen ausgegebenen SIM-Karten werden von den Teilnehmern in ihren Funkteilnehmerstationen DM bzw. Teilnehmerstationen UPTS eingesetzt, um sich gegenüber dem jeweiligen Netz zu identifizieren. Im vorliegenden Beispiel sei angenommen, daß von der Authentifikationseinrichtung AC als Sicherheitsparameter, die für den Netzzugang der Teilnehmer zum privaten Netz CN erforderlich sind, eine Zufallszahl RAND, ein Schlüssel KC zur Verschlüsselung der Informationen während der Funkübertragung und das zur Berechtigungsüberprüfung des Teilnehmeridentitätsmoduls SIM gegenüber dem Netz benötigte Signal SRES (Signed Response) bereitgestellt und in einer Nachricht RSAUI (Result Send Authentication Info) zur Mobilvermittlungsstelle MSC ausgesendet werden. Dabei wird vorzugsweise ein Satz oder mehrere Sätze von Sicherheitsparametern bereitgestellt, die im privaten Netz CN zunächst zur Authentifikation von Teilnehmern verarbeitet werden, bevor weitere Sätze von Sicherheitsparametern angefordert werden. Somit können mehrere und verschiedene Sätze von Sicherheitsparametern von der Authentifikationseinrichtung des Mobilfunknetzes abgerufen und sukzessive im privaten Netz, im vorliegenden Beispiel von der Nebenstelleneinrichtung PBX mit zugehöriger Teilnehmerdatenbasis DB, verarbeitet werden. Die Mobilvermittlungsstelle MSC sendet nach Empfang der Nachricht RSAUI die eintreffenden Parameter RAND, SRES, KC in einer Nachricht RSP (Result Security Parameter) über die Schnittstelle in das private Netz, wo sie in der Teilnehmerdatenbasis DB der Nebenstelleneinrichtung PBX als Sicherheitsparameter SPAR gespeichert werden. Diese Prozedur wiederholt sich jedesmal, wenn die Authentifikationseinrichtung AC einen Satz von Sicherheitsparametern, die zuvor angefordert wurden, bereitstellt und übermittelt. Die Teilnehmerauthentifikation für den in der Nebenstelleneinrichtung PBX registrierten Teilnehmer des privaten Netzes CN erfolgt anschließend selbständig dadurch, daß von der Nebenstelleneinrichtung PBX eine Nachricht AUR mit der Zufallszahl RAND als Nachrichteninhalt zur jeweiligen Teilnehmerstation DM bzw. UPTS ausgesendet wird. Für die Verschlüsselung der Informationen wird der gesonderte Schlüssel KC entweder von der an die Nebenstelleneinrichtung PBX angeschlossenen Basisstation oder der Teilnehmerstation zum Aussenden verschlüsselter Nutz- oder Signalisierungsinformationen verwendet.

Mit der Nachricht AUR signalisiert die Nebenstelleneinrichtung PBX den Wunsch zur Authentifikation, der von der Teilnehmerstation DM bzw. UPTS mit der Rückübertragung einer Nachricht RAU mit dem Signal SRES als Nachrichteninhalt beantwortet wird. Auf Grund der eintreffenden Zufallszahl RAND berechnet die jeweilige Teilnehmerstation mit Hilfe des geheimen Teilnehmerschlüssels, der von der Vorbereitung der SIM-Karte stammt, das Signal SRES, das von der Nebenstelleneinrichtung PBX mit dem in der Teilnehmerdatenbasis DB gespeicherten Signal SRES auf Identität verglichen wird. Bei Übereinstimmung der beiden Signale ist die Teilnehmerauthentifikation des im privaten Netz CN registrierten Teilnehmers erfolgreich durchgeführt worden, ohne daß hierzu ein Sicherheitsalgorithmus im Netz des Teilnehmers implementiert zu werden braucht. Getrennte Authentifikationsprozeduren für mobile Teilnehmer des Mobilfunknetzes (PLMN) und für Teilnehmer eines anderen Netzes CN entfallen. Die Sicherheitsparameter - im vorliegenden Beispiel die GSM-Sicherheitsparameter für die Teilnehmerauthentifikation der Teilnehmer des privaten Netzes CN werden zuvor angefordert und übertragen, jedoch ohne daß ein Teilnehmereintrag für die Teilnehmer des privaten Netzes in einer Teilnehmerdatenbasis des Mobilfunknetzes erfolgt. Das vorliegende Beispiel bezieht sich auf die Bereitstellung von GSM-Sicherheitsparametern, die gemäß GSM-Sicherheitsalgorithmen verarbeitet werden, jedoch sind auch andere Sicherheitsparameter und Sicherheitsalgorithmen für die Teilnehmerauthentifikation der Teilnehmer anderer Netze bzw. für die Verschlüsselung der Informationen denkbar. Erforderlich für die Übertragung der Sicherheitsparameter ist eine Schnittstellenverbindung mit einem Schnittstellenprotokoll zwischen Mobilfunknetz und jedem anderen Netz vorzusehen.

## Patentansprüche

1. Verfahren zur Teilnehmerauthentifikation und/oder zur Verschlüsselung von Informationen, bei dem mobile Teilnehmer sich gegenüber einem Mobilfunknetz (PLMN) mit einem in einer Teilnehmerstation enthaltenen Teilnehmeridentitätsmodul (SIM) identifizieren und in zumindestens einer Teilnehmerdatenbasis des Mobilfunknetzes (PLMN) eingerichtet und in einer Authentifikationseinrichtung (AC) registriert werden, von der zum Schutz der Teilnehmerdaten jeweils Sicherheitsparameter und Sicherheitsalgorithmen für die mobilen Teilnehmer bereitgestellt werden,
**dadurch gekennzeichnet,**
- **daß** Teilnehmer eines anderen, über eine Schnittstelle(DSS1+) mit dem Mobilfunknetz (PLMN) verbundenen Netzes (CN) sich mit dem Teilnehmeridentitätsmodul (SIM) identifizieren und zumindestens in einer Teilnehmerdatenbasis (DB) des anderen Netzes (CN) eingerichtet werden,
- **daß** die Sicherheitsparameter (SPAR) für den eingerichteten Teilnehmer des anderen Netzes (CN) über die Schnittstelle (DSS1+) angefordert, von der Authentifikationseinrichtung (AC) des Mobilfunknetzes (PLMN) bereitgestellt und über die Schnittstelle (DSS1+) zum anderen Netz (CN) übertragen werden, ohne daß dabei ein Teilnehmereintrag in der Teilnehmerdatenbasis (HLR) des Mobilfunknetzes (PLMN) erfolgt und
- **daß** die Teilnehmerauthentifikation für die Teilnehmer des anderen Netzes (CN) und/oder die Verschlüsselung der Informationen anhand der vom Mobilfunknetz (PLMN) empfangenen Sicherheitsparameter in diesem anderen Netz (CN) ausgeführt werden.

2. Verfahren nach Anspruch 1,
**dadurch gekennzeichnet,**
**daß** die jeweils die Sicherheitsparameter (SPAR) bereitstellende Authentifikationseinrichtung (AC) im Mobilfunknetz (PLMN) durch eine Teilnehmerkennung (IMSI) ermittelt wird, die von der Teilnehmerstation (UPTS, DM) aus dem Teilnehmeridentitätsmodul (SIM) gelesen und und über die Schnittstelle (DSS1+) gesendet wird.

3. Verfahren nach Anspruch 1 oder 2,
**dadurch gekennzeichnet,**
**daß** die im anderen Netz (CN) eintreffenden Sicherheitsparameter (SPAR) zusätzlich zu den Teilnehmerdaten in die Teilnehmerdatenbasis (DB) eingetragen werden.

4. Verfahren nach Anspruch 3,
**dadurch gekennzeichnet,**
**daß** die Teilnehmerdatenbasis (DB) die Heimat-Datenbasis der im anderen Netz (CN) registrierten Teilnehmer ist.

5. Verfahren nach einem der vorhergehenden Ansprüche,
**dadurch gekennzeichnet,**
**daß** über die Schnittstelle (DSS1+) jeweils ein Satz oder mehrere Sätze von Sicherheitsparametern (SPAR) angefordert und übertragen werden sowie die Teilnehmerauthentifikation und/oder Verschlüsselung durchgeführt wird, bevor weitere Sätze von Sicherheitsparametern zur Verfügung gestellt werden.

6. Verfahren nach einem der vorhergehenden Ansprüche,
**dadurch gekennzeichnet,**
**daß** das Mobilfunknetz (PLMN) ein zellulares Mobilfunknetz nach dem GSM-Standard ist, von dem GSM-Sicherheitsparameter (SRES, RAND, KC) für die Teilnehmer des anderen Netzes (CN) bereitgestellt werden.

7. Verfahren nach einem der vorhergehenden Ansprüche,
**dadurch gekennzeichnet,**
**daß** bei Verwendung einer Funkteilnehmerstation (DM) für die Teilnehmer des anderen Netzes (CN) die Sicherheitsalgorithmen Maßnahmen zur Verschlüsselung der zwischen der Funkteilnehmerstation und einer Basisstation (BS) über die Luft zu sendenden Informationen enthalten.

8. System zur Teilnehmerauthentifikation und/oder zur Verschlüsselung von Informationen, bei dem mobile Teilnehmer sich mit einem in einer Teilnehmerstation enthaltenen Teilnehmeridentitätsmodul (SIM) gegenüber einem Mobilfunknetz (PLMN) identifizieren und in zumindestens einer Teilnehmerdatenbasis des Mobilfunknetzes (PLMN) eingerichtet und in einem Authentifikationseinrichtung (AC) registriert sind, von dem zum Schutz der Teilnehmerdaten jeweils Sicherheitsparameter und Sicherheitsalgorithmen für die mobilen Teilnehmer bereitstellbar sind,
**dadurch gekennzeichnet,**
- **daß** das Mobilfunknetz (PLMN) über eine Schnittstelle(DSS1+) mit einem anderen Netz (CN) verbunden ist, dessen Teilnehmer sich mit dem Teilnehmeridentitätsmodul (SIM) ihrer Teilnehmerstationen (UPTS, DM) identifizieren und zumindestens in einer Teilnehmerdatenbasis (DB) des Netzes (CN) eingerichtet sind,
- **daß** Mittel (PBX) im anderen Netz (CN) vorgesehen sind, die Sicherheitsparameter (SPAR) für den eingerichteten Teilnehmer des anderen Netzes (CN) über die Schnittstelle (DSS1+) anfordern, und Mittel in der jeweiligen Authentifikationseinrichtung (AC) des Mobilfunknetzes (PLMN) vorgesehen sind, die die Sicherheitsparameter (SPAR) bereitstellen, und Mittel (MSC) im Mobilfunknetz vorgesehen sind, die die Sicherheitsparameter (SPAR) über die Schnittstelle (DSS1+) zum anderen Netz (CN) aussenden, ohne daß dabei ein Teilnehmereintrag in der Teilnehmerdatenbasis des Mobilfunknetzes (PLMN) erfolgt und
- **daß** Mittel (PBX) im anderen Netz (CN) vorgesehen sind, die die Teilnehmerauthentifikation für die Teilnehmer des anderen Netzes (CN) und/oder die Verschlüsselung der Informationen anhand der vom Mobilfunknetz (PLMN) empfangenen Sicherheitsparameter ausführen.

## Claims

1. Method for subscriber authentication and/or encryption of items of information, in which mobile subscribers identify themselves to a mobile radiotelephone network (PLMN) with a subscriber identity module (SIM) contained in a subscriber station and are created and registered in an authentication center in at least one subscriber database of the mobile radiotelephone network (PLMN) and are registered in an authentication center (AC), which center respectively provides security parameters and security algorithms for the mobile subscribers, for protection of subscriber data of the mobile subscribers;
**chararacterized in that**
- subscribers of a further network, connected via an interface (DSS1+) to the mobile radiotelephone network identify themselves with the subscriber identity module (SIM) and are created at least in one subscriber database (DB) of the further network,
- the security parameters (SPAR) for the installed subscriber of the further network (CN) are requested via the interface, provided by the authentication center of the mobile radiotelephone network (PLMN) and are transmitted over the interface (DSS1+) to the further network (CN) without an entry being made in the home location register (HLR) of the mobile radiotelephone network (PLMN) and
- the subscriber authentication for the subscribers of the further network (CN) and or the encryption of items of information is undertaken on the basis of security parameters received from the mobile radiotelephone network in this further network (CN).

2. The method according to claim 1,
**chararacterized in that**
the authentication center (AC) that provides the security parameters (SPAR) in the mobile radiotelephone network (PLMN) is identified by a subscriber identification (IMSI) that is read from the subscriber identity module (SIM) by the subscriber station (UTS, DM) and is sent via the interface.

3. Method according to claim 1 or 2
**chararacterized in that**
the security parameters (SPAR) received from the mobile radiotelephone network are entered into the subscriber database (DB) of the further network (CN) in addition to the subscriber data.

4. Method according to claim 3,
**chararacterized in that**
the subscriber database (DB) is a home database of subscribers registered in the further network (CN).

5. Method according to one of the previous claims
**chararacterized in that**
one set or a number of sets of security parameters (SPAR) is or are requested and transmitted via the interface (DSS1+), and also subscriber authentication and/or encryption is carried out before further sets of security parameters are made available.

6. Method according to one of the previous claims
**chararacterized in that**
the mobile radiotelephone network (PLMN) is a cellular mobile radiotelephone network according to a GSM (Global System for Mobile Communication) standard, which network provides GSM security parameters (SRES, RAND, KC) for the subscribers of the further network (CN),

7. Method according to one of the previous claims
**chararacterized in that,**
given the use of a radiotelephone subscriber station (DM) for the subscribers of the further network (CN), the security algorithms have measures for encryption of items of information to be sent via air between the radiotelephone subscriber station and a base station (BS).

8. System for subscriber authentication and/or encryption of items of information, in which mobile subscribers identify themselves to a mobile radiotelephone network (PLMN) with a subscriber identity module (SIM) contained in a subscriber station and are created and registered in an authentication center (AC) in at least one subscriber database of the mobile radiotelephone network (PLMN) and are registered in an authentication center (AC), which center respectively provides security parameters and security algorithms for the mobile subscribers, for protection of subscriber data of the mobile subscribers;
**chararacterized in that**
- the mobile radiotelephone network (PLMN) is connected via an interface (DSS1+) to the further network, of which the subscribers identify themselves with the subscriber identity module (SIM) of their subscriber stations (UPTS, DM) and are created at least in one subscriber database (DB) of the further network (CN),
- means (PBX) are provided in the other network (CN) which request security parameters (SPAR) for the installed subscribers of the further network (CN) via the interface (DSS1+), and means are provided in the respective authentication center (AC) of the mobile radiotelephone network (PLMN) which provided the security parameters (SPAR), and means (MSC) are provided in the mobile radiotelephone network which transmit the security parameters (SPAR) over the interface (DSS1+) to the further network (CN) without an entry being made in the home location register (HLR) of the mobile radiotelephone network (PLMN) and
- means (PBX) are provided in the further network (CN) which execute the subscriber authentication for subscribers of the further network (CN) and/or the encryption of the items of information on the basis of security parameters received from the mobile radiotelephone network (PLMN).

## Revendications

1. Procédé pour l'authentification d'abonné et/ou pour le codage d'informations, dans lequel des abonnés mobiles s'identifient par rapport à un réseau de téléphonie mobile (PLMN) avec un module d'identité d'abonné (SIM) contenu dans une station d'abonné et sont mis en place dans au moins une base de données d'abonné du réseau de téléphonie mobile (PLMN) et sont enregistrés dans un centre d'authentification (AC), qui met à disposition pour la protection des données d'abonnés à chaque fois des paramètres et des algorithmes de sécurité pour les abonnés mobiles,
**caractérisé en ce que**
- des abonnés d'un autre réseau (CN) relié par une interface (DSS1+) au réseau de téléphonie mobile (PLMN) s'identifient avec le module d'identité d'abonné (SIM) et sont mis en place au moins dans une base de données d'abonnés (DB) de l'autre réseau (CN),
- **en ce que** les paramètres de sécurité (SPAR) pour l'abonné mis en place de l'autre réseau (CN) sont demandés par l'interface (DSS1+), sont mis à disposition par le centre d'authentification (AC) du réseau de téléphonie mobile (PLMN) et sont transmis par l'interface (DSS1+) à l'autre réseau (CN), sans qu'on ait une inscription d'abonné dans la base de données d'abonné (HLR) du réseau de téléphonie mobile (PLMN) et **en ce que** l'authentification d' abonné pour les abonnés de l'autre réseau (CN) et/ou le codage des informations est effectuée à l'aide des paramètres de sécurité reçus du réseau de téléphonie mobile (PLMN) dans cet autre réseau (CN).

2. Procédé selon la revendication 1,
**caractérisé en ce que**
le centre d'authentification (AC) mettant à disposition à chaque fois les paramètres de sécurité (SPAR) est déterminé dans le réseau de téléphonie mobile (PLMN) par un code d'abonné (IMSI), qui est lu par la station d'abonné (UPTS, DM) à partir du module d'identité (SIM) et est envoyé par l' interface (DSS1+) .

3. Procédé selon la revendication 1 ou 2,
**caractérisé en ce que**
les paramètres de sécurité (SPAR) arrivant dans l'autre réseau (CN) sont inscrits en supplément des données d'abonné dans la base de données d'abonnés (DB).

4. Procédé selon la revendication 3,
**caractérisé en ce que**
la base de données d'abonnés (DB) est la base de données locale des abonnés enregistrés dans l'autre réseau (CN).

5. Procédé selon l'une quelconque des revendications précédentes,
**caractérisé en ce que**
à chaque fois un ensemble ou plusieurs ensembles de paramètres de sécurité (SPAR) sont demandés et transmis par l'interface (DSS1+) et l'authentification d'abonné et/ou le codage est effectué avant que d'autres ensembles de paramètres de sécurité soient mis à disposition.

6. Procédé selon l'une quelconque des revendications précédentes,
**caractérisé en ce que**
le réseau de téléphonie mobile (PLMN) est un réseau de téléphonie mobile cellulaire selon le standard GSM, qui met à disposition des paramètres de sécurité GSM (SRES, RAND, KC) pour les abonnés de l'autre réseau (CN).

7. Procédé selon l'une quelconque des revendications précédentes,
**caractérisé en ce qu'**
en cas d'utilisation d'une station d' abonné radio (DM) pour les abonnés de l'autre réseau (CN), les algorithmes de sécurité contiennent des mesures pour le codage des informations à transmettre par l'air entre la station d'abonné radio et une station de base (BS).

8. Système pour l'authentification d'abonné et/ou pour le codage d'informations, dans lequel des abonnés mobiles s'identifient avec un module d'identité d'abonné (SIM) contenu dans une station d'abonné par rapport à un réseau de téléphonie mobile (PLMN) et sont mis en place dans au moins une base de données d'abonnés du réseau de téléphonie mobile (PLMN) et sont enregistrés dans un centre d'authentification (AC), qui peut mettre à disposition à chaque fois des paramètres de sécurité et des algorithmes de sécurité pour les abonnés mobiles pour la protection des données d'abonnés,
**caractérisé en ce que**
- le réseau de téléphonie mobile (PLMN) est relié par une interface (DSS1+) à un autre réseau (CN), dont les abonnés s'identifient avec le module d'identité d'abonné (SIM) de leurs stations d'abonnés (UPTS, DM) et sont mis en place au moins dans une base de données d'abonnés (DB) du réseau (CN),
- **en ce que** des moyens (PBX) sont prévus dans l'autre réseau (CN), qui demande des paramètres de sécurité (SPAR) pour l'abonné mis en place de l'autre réseau (CN) par l'intermédiaire de l'interface (DSS1+), et des moyens sont prévus au centre d'authentification (AC) concerné du réseau de téléphonie mobile (PLMN), qui mettent à disposition les paramètres de sécurité (SPAR), et des moyens (MSC) sont prévus dans le réseau de téléphonie mobile, lesquels envoient les paramètres de sécurité (SAPR) par l'interface (DSS1+) à l'autre réseau (CN), sans que de ce fait une inscription d'abonnés dans la base des données d'abonnés du réseau de téléphonie mobile (PLMN) soit effectuée et
- **en ce que** des moyens (PBX) sont prévus dans l'autre réseau (CN), lesquels exécutent l'authentification d'abonné pour les abonnés de l'autre réseau (CN) et/ou le codage des informations à l'aide des paramètres de sécurité reçus du réseau de téléphonie mobile (PLMN).
